# FASCICULE DE BREVET EUROPEEN

(11) **EP 1 785 651 B1**
(45) Date de publication et mention de la délivrance du brevet: **15.04.2009**
(21) Numéro de dépôt: 06124101.4
(22) Date de dépôt: 15.11.2006
(51) Int. Cl.: F16J 15/44, F01D 11/00, B23H 9/10

(54) **Léchette annulaire destinée à un labyrinthe d'étanchéité, et son procédé de fabrication**
Ringförmige Schneidendichtung für eine Labyrinthdichtung und sein Herstellungsverfahren
Annular knife edge seal for a labyrinth sealing and its manufacturing method

(30) Priorité: 15.11.2005 FR 0511579
(43) Date de publication de la demande: 16.05.2007
(73) Titulaire: SNECMA, 75015 Paris (FR)
(72) Inventeur: Mons, Claude, 77176 Savigny le Temple (FR); Vigneau, Joël, 91750 Champcueil (FR)
(74) Mandataire: Cardy, Sophie Marie

(56) Documents cités:
- DE-A1- 4 341 216
- DE-C- 474 361
- US-A- 3 537 713
- US-A- 5 660 320
- US-A1- 2004 012 151
- US-B1- 6 478 304
- PATENT ABSTRACTS OF JAPAN vol. 010, no. 227 (M-505), 7 août 1986 (1986-08-07) & JP 61 061720 A (NISSAN MOTOR CO LTD), 29 mars 1986 (1986-03-29)
- PATENT ABSTRACTS OF JAPAN vol. 004, no. 132 (M-032), 17 septembre 1980 (1980-09-17) & JP 55 090229 A (TOSHIBA CORP), 8 juillet 1980 (1980-07-08)

## Description

L'invention concerne une pièce thermomécanique de turbomachine de révolution autour d'un axe longitudinal, comprenant au moins une léchette annulaire destinée à un labyrinthe d'étanchéité, son procédé de fabrication et une turbomachine équipée d'une telle pièce thermomécanique.

Un labyrinthe d'étanchéité, encore appelé joint labyrinthe, comprend une partie tournante à ailettes (ou léchettes) avec un alésage statique recouvert d'un matériau abradable mou, ou une structure en nid d'abeilles capable de résister à des températures élevées. Au démarrage du moteur, les ailettes du joint frottent légèrement contre la garniture, mordant dans cette dernière, ce qui aboutit à un écartement minimum. Ce jeu varie au cours des différents cycles de vol, selon la dilatation des pièces et la souplesse naturelle des parties mobiles.

Les léchettes de labyrinthes permettent d'assurer les étanchéités aérodynamiques entre des enceintes d'air sous des pressions différentes. Elles sont en général situées sur la partie rotor en vis-à-vis de parties statoriques. Elles sont constituées principalement de « lames » continues ou segmentées de forme annulaire, pouvant être dirigées radialement vers l'intérieur ou vers l'extérieur.

En particulier, lorsqu'elles présentent une forme continue, les léchettes sont susceptibles d'entrer en contact avec le stator dans certaines configurations de fonctionnement. Pour éviter leur destruction dans ces situations, on équipe les stators de revêtements permettant l'interface et qui sont dénommés « abradables ». Dans ce cas, les séquences usuelles de pénétration des léchettes dans les abradables consistent en une coupe radiale associée à un déplacement axial («chariotage»).

Les matériaux abradables usuels peuvent se révéler en réalité relativement abrasifs, particulièrement vis-à-vis de certaines léchettes continues, surtout si celles-ci sont réalisées en alliage à base de titane, mais aussi en acier ou en alliage à base de nickel. C'est notamment particulièrement vrai pour les abradables réalisés sous la forme de nids d'abeilles en alliage réfractaire.

Pour éviter les détériorations, voir les destructions, des léchettes, habituellement on revêt celles-ci par projection thermique (torche à plasma, à flamme oxygène à haute vitesse HVOF, ...) d'un dépôt abrasif de type alumine/bioxyde de titane ou carbure, par exemple sur une sous-couche d'alliage aluminium et nickel, pour en assurer l'adhérence.

Le dépôt par projection thermique requiert de respecter des angles relatifs de projection entre l'axe de la torche et les surfaces des pièces à revêtir, de manière à ce que l'impact des particules projetées soit le plus orthogonal possible par rapport à la surface à revêtir afin d'obtenir une qualité et une adhérence du dépôt satisfaisantes. Également cette technique exige une distance minimale entre l'outil de projection et la surface : en effet la zone centrale chaude du dard de la torche est à plusieurs milliers de degrés centigrades et il faut donc la tenir suffisamment éloignée de la pièce ; en outre, les particules à déposer doivent être suffisamment accélérées pour adhérer sur les surfaces à protéger.

Par ailleurs, les gaz propulseurs ou plasmagènes utilisés pour la projection doivent pouvoir être aisément évacués sans toutefois «souffler» la poudre projetée en créant des turbulences.

En général, les léchettes sont orientées quasiment de façon orthogonale aux surfaces cylindriques des rotors, et elles sont souvent situées au voisinage de toiles de disques ou de labyrinthes, au fond de cavités ou à proximité d'autres léchettes lorsqu'elles sont disposées en série.

Parmi ces situations, nombreux sont les cas qui présentent un agencement géométrique qui rend la réalisation de dépôt par projection thermique très aléatoire ou quasiment impossible.

La présente invention a pour but de surmonter cet inconvénient en proposant une solution qui permette de s'affranchir de la réalisation de dépôt par projection thermique afin de pouvoir tout de même réaliser des léchettes qui ne sont pas endommagées par leur contact avec la couronne d'abradable.

Une telle léchette est connue de US 6,478,304, mais ce but de l'invention est atteint par le fait que la pièce thermomécanique de turbomachine est équipée d'une léchette qui présente en direction radiale une hauteur variable le long de sa circonférence en formant plusieurs parties radialement en saillie et formées par un cavalier en forme de U fixé par chevauchement dans une empreinte en creux réalisée dans la léchette, le cavalier ayant un profil complémentaire de cette léchette.

De cette façon, on comprend que la léchette ne forme plus une lame continue présentant une hauteur constante, mais que du fait de la présence des parties en saillie distinctes, c'est-à-dire d'un profil tranversal de léchette ayant un contour extérieur non circulaire, elle présente, outre la fonction d'étanchéité, également un aspect « outil de coupe ». De cette façon, on peut se passer du dépôt d'un revêtement abrasif.

En effet, on propose donc de remplacer une lame continue, de section constante, revêtue d'un dépôt de protection également continu, par une léchette formé d'une lame continue ou discontinue comportant des éléments abrasifs ou coupants résultants des différentes parties en saillie réparties sur différents secteurs angulaires, et formées par un cavalier en forme de U fixé par chevauchement dans une empreinte en creux réalisée dans la léchette, le cavalier ayant un profil complémentaire de cette léchette.

En particulier, on prévoit que la léchette forme un anneau de forme discontinue en section présentant le long de sa circonférence plusieurs parties en saillie entre lesquelles subsiste un intervalle ou une rupture dans la hauteur.

De cette façon, on forme directement dans le volume de la léchette des dents de scie qui pourront entamer plus facilement le matériau abradable qu'une léchette formée d'une lame continue.

L'invention concerne aussi un procédé de fabrication d'une léchette annulaire destinée à un labyrinthe d'étanchéité, sur une pièce thermomécanique de turbomachine de révolution autour d'un axe longitudinal.

Egalement, la présente invention porte sur une turbomachine, comportant une pièce thermomécanique réalisée conformément au procédé et/ou conforme à la description de cette pièce thermomécanique.

L'invention a pour but de proposer un procédé permettant de manière simple de fabriquer une telle léchette sans recourir à un dépôt de revêtement.

Selon l'invention, ce but est atteint par le fait que le procédé comporte les étapes suivantes :
a) on fournit une pièce thermomécanique de turbomachine de révolution autour d'un axe longitudinal présentant une léchette annulaire de hauteur en direction radiale sensiblement constante tout le long de la circonférence,
b) on fournit une machine d'usinage ainsi qu'un outil d'usinage ayant un profil en creux qui est contenu dans le profil radial de la léchette annulaire,
c) on réalise l'usinage d'au moins une empreinte ayant le profil complémentaire au profil en creux de l'outil d'usinage à la surface de la léchette en plongeant l'outil d'usinage en direction radiale; et
d) on fournit un cavalier en forme de U réalisé dans un matériau plus dur que la pièce et ayant un profil en creux complémentaire de ladite empreinte ;
e) on dispose ledit cavalier sur ladite empreinte par chevauchement, ce qui engendre une surépaisseur locale au moins en direction radiale ; et
f) on relie le cavalier à ladite léchette.

Ici, on comprend que la forme de la léchette est modifiée par deux étapes successives : usinage par avancée radiale, sans rotation de la pièce, à l'aide d'un outil d'usinage, pour former au moins une empreinte en creux qui reçoit ensuite un cavalier fixé à la pièce et qui forme une surépaisseur locale par rapport au reste de la surface circonférentielle de la léchette.

On comprend que l'on réalise une léchette apte, par sa seule forme présentant une hauteur variable, en l'espèce une surépaisseur formée par le cavalier, à usiner l'abradable à l'instar d'un outil de coupe, sans recourir à un dépôt par projection thermique.

En outre, ce procédé de fabrication conforme à l'invention peut être mis en oeuvre quel que soit l'emplacement ou l'agencement de la léchette, en particulier quel que soit l'espace disponible autour de la léchette qui forme une partie d'une pièce thermomécanique, en particulier un rotor de turbomachine.

L'invention sera bien comprise et ses avantages apparaîtront mieux à la lecture de la description détaillée qui suit, d'un mode de réalisation de l'invention représenté à titre d'exemple non limitatif.

La description se réfère aux dessins annexés sur lesquels:
- la figure 1 montre une demi coupe axiale d'un rotor de turbine d'un turboréacteur avec la disposition du flasque et des labyrinthes d'étanchéité en amont des injecteurs principaux,
- la figure 2 représente une vue similaire à celle de la figure 1 pour une pièce thermomécanique de révolution présentant une léchette conforme à l'invention,
- la figure 3 représente une vue en coupe radiale agrandie de la léchette de la figure 2 selon la ligne III-III de la figure 2 ,
- la figure 4 représente une vue agrandie et partielle en coupe radiale avec perspective de la léchette selon la ligne IV-IV de la figure 2 ; et,
- les figures 5 et 6 représentent des vues agrandies respectivement en coupe radiale et en coupe radiale avec perspective partielle selon la ligne VI-VI de la figure 2 de la léchette au cours de deux étapes différentes du procédé de fabrication conforme à l'invention.

La présente invention portant sur des léchettes d'étanchéité d'une pièce thermomécanique de révolution de turboréacteur, en particulier pour un rotor, on décrit ci-après une application possible, non limitative, de cette forme de léchette conforme à la présente invention.

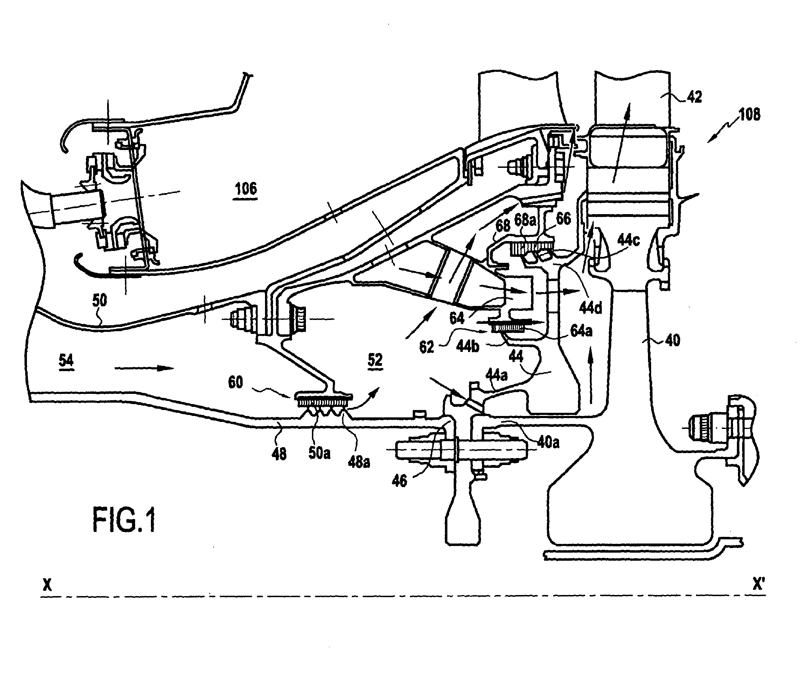

La figure 1 représente un cas dans lequel les léchettes sont utilisées dans les labyrinthes étanchéité et sont disposées en face d'éléments abradables. Il s'agit du cas du circuit de ventilation d'une turbine à haute pression disposée en aval d'une chambre de combustion 106.

En particulier, on y trouve une turbine 108 avec son rotor de révolution, mobile en rotation autour d'un axe X-X'.

Le rotor de la turbine 108 comporte un disque de turbine 40 équipé d'aubes 42, et un flasque 44 disposé en amont du disque 40. Le disque 40 et le flasque 44 comportent chacun une bride amont, référencée 40a pour le disque 40 et 44a pour le flasque 44, pour leur fixation à l'extrémité aval 46 du cône aval 48 du compresseur haute pression entraîné par le rotor de la turbine 108.

Cet agencement de circuit de refroidissement comporte trois labyrinthes successifs de décharge.

Un premier labyrinthe de décharge 60 est formé en amont de l'enceinte 52 séparant le flasque 44 du fond de chambre et en aval de l'enceinte 54 séparant le cône aval 48 du compresseur à haute pression du carter intérieur 50 de la chambre de combustion 106. Ce premier labyrinthe de décharge 60 comprend des léchettes 48a formée sur le cône aval 48 et une couronne 50a de matériau abradable montée à l'extrémité d'un flasque solidaire du carter intérieur 50.

Un deuxième labyrinthe de décharge 62 est situé sous des injecteurs 64, en aval de l'enceinte 52. Ce deuxième labyrinthe de décharge 62 est formé de léchettes 44b du flasque 44 et d'une couronne de matériau abradable 64a montée sur les injecteurs 64.

Le troisième labyrinthe de décharge 66 est situé au-dessus des injecteurs 64, et comporte trois léchettes 44c successives formées sur une portion coudée 44d du flasque 44 et une couronne d'étanchéité abradable 68a montée sur le carter intérieur 68.

Selon l'invention, toutes ou une partie de ces différentes léchettes 48a, 44b et 44c présentent une forme avec une épaisseur variable le long de leur circonférence, sans aucun revêtement, et non une forme d'anneau d'épaisseur constante présentant un revêtement.

Sur la figure 1, l'application de la présente invention est représentée en relation avec une turbine haute pression. Toutefois, il faut comprendre que la présente invention peut être mise en oeuvre dans d'autres zones d'une turbomachine, notamment dans un compresseur haute pression, un compresseur basse pression ou une turbine basse pression.

Également, sur la figure 1, les léchettes sont disposées sur un rotor mobile en étant toutes dirigées radialement en direction de l'extérieur. Cependant, on conçoit tout à fait que la présente invention peut également s'appliquer à des léchettes dirigées radialement en direction de l'axe de rotation.

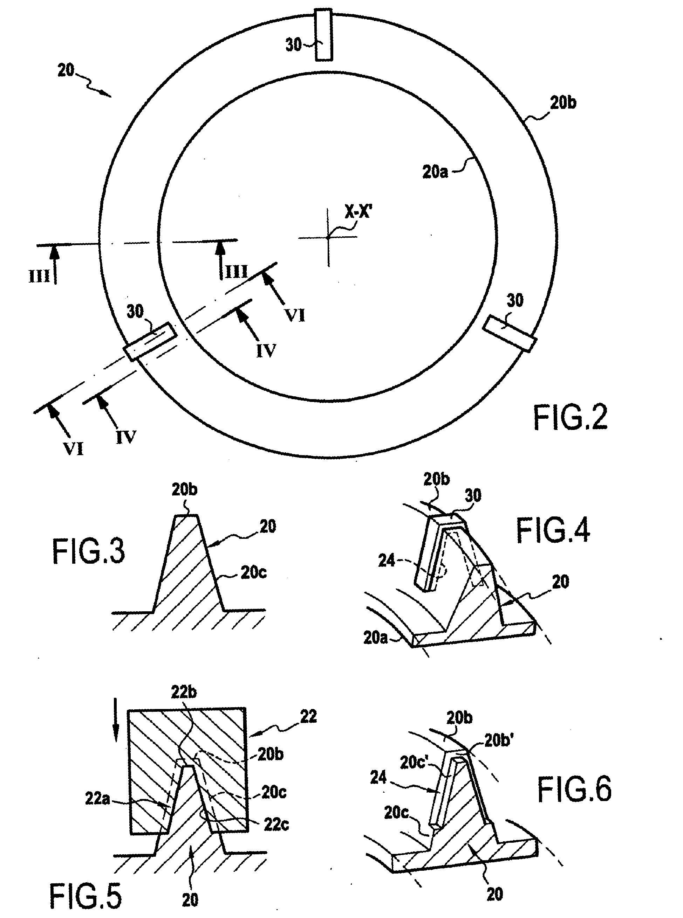

À titre d'exemple de la présente invention, on se reporte maintenant aux figures 2 à 6.

Sur la figure 2, on retrouve l'axe de rotation X-X' autour duquel s'étend radialement une léchette 20 présentant un contour intérieur circulaire 20a d'axe X-X' et un contour extérieur 20b quasi circulaire. Plus précisément, le contour extérieur 20b est circulaire, c'est-à-dire qu'il présente une hauteur constante le long de sa circonférence comme pour une léchette annulaire conforme à l'art antérieur, à l'exception de plusieurs emplacements (trois sur la figure 2) où est présente une surépaisseur du fait de la présence d'un élément rapporté formé d'un cavalier 30.

En section la léchette 20 présente, en dehors de l'emplacement des cavaliers 30, un contour en forme de U inversé dont les branches forment les deux flancs 20c latéraux inclinés de façon convergente en direction du sommet de la léchette 20, qui forme la base du U, et qui est constitué par le contour extérieur 20b dont la section visible sur la figure 3 est sensiblement parallèle à l'axe de rotation X-X'.

Comme il apparaît sur la figure 4, à l'emplacement d'un cavalier 30, la léchette 20 est légèrement plus haute et plus large, le cavalier 30 étant positionné par chevauchement sur une grande partie de la hauteur des flancs 20c de la léchette 20 (par exemple 2 à 12 millimètres).

Avant de monter des cavaliers sur la léchette 20 , on réalise en premier lieu une empreinte 24 locale sur le profil extérieur de la léchette 20 en utilisant un outil d'usinage formé par exemple d'une électrode 22 d'une machine à électro érosion («Electro Discharge Machine" ou machine d'usinage par procédé électrolytique), telle que l'électrode 22 visible sur la figure 5.

À cet effet, le profil en creux de la zone de coupe 22a de l'électrode 22 présente en section également la forme d'un U dont les branches sont formées des parois inclinées 22c qui convergent en direction du fond 22b en formant sensiblement le même angle aigu que les flancs 20c de la léchette 20.

Cependant, pour entamer simultanément les flancs 20c et le contour extérieur 20b formant le sommet de la léchette 20, la zone de coupe 22a de l'électrode 22 présente un fond présentant une largeur plus faible que la largeur du contour extérieur ou sommet 20b de la léchette 20, dans la direction de l'axe de rotation X-X' .

Pour obtenir l'empreinte 24 dont la section est visible sur la figure 6, on réalise une plongée de l'électrode 22 alors que la pièce portant la léchette 20 est immobile, en particulier n'est pas en rotation comme dans le cas de la première variante de réalisation décrite précédemment. Comme les parois inclinées 22c de l'électrode 22 présentent une hauteur beaucoup plus courte que la hauteur des flancs 20c de la léchette, à l'emplacement de l'empreinte 24 ces flancs 20c sont usinés uniquement sur une portion de leur hauteur depuis le contour extérieur 20b comme il apparaît sur la figure 6.

De cette façon, au niveau de l'empreinte 24, le contour extérieur de la léchette 20 correspond au sommet 20b' situé plus bas que le contour extérieur 20b et les flancs 20c' de l'empreinte 24 sont rapprochés davantage l'un de l'autre que les flancs 20c du reste de la léchette 20.

Ensuite, on utilise un cavalier 30 réalisé préalablement par usinage ou, de préférence, par moulage ou compactage de métal, de céramiques et/ou de carbures, par la métallurgie des poudres (MDP), ou par le procédé de moulage par injection de métal (MIM).

Un tel cavalier 30 est réalisé dans un matériau plus dur que la léchette.

On relie ensuite le cavalier 30 à la léchette 20, par exemple par brasure.

En particulier, notamment si la léchette est réalisée en alliage de titane (située par exemple face à un abradable en nid d'abeille en alliage nickel molybdène chrome -en particulier de type hastelloy X (marque déposée)) le cavalier est réalisé en acier ou en superalliage ou en céramique, la liaison par brasage utilisant un métal d'apport de type Ti Cu Ni.

Selon l'invention, la léchette 20 présente une hauteur différente, en l'occurrence constante, selon les secteurs angulaires, à savoir selon la présence ou non d'un cavalier dans le secteur angulaire considéré, étant noté que chaque cavalier s'étend sur un secteur angulaire très limité de l'ordre de un à quelques degrés pour une épaisseur voisine du millimètre.

Dans ce cas, on peut noter qu'à l'exception des parties en saillie correspondant à l'emplacement des cavaliers 30, la léchette 20 présente une hauteur sensiblement constante.

En outre, du fait de la présence du cavalier 30, de préférence au moins la couche extérieure des parties en saillies est réalisée en un matériau différent du reste de la léchette 20.

Plus précisément chaque partie en saillie comporte, comme on peut le voir sur la figure 7, une âme réalisée dans le même matériau que le support formant la léchette 20 annulaire de départ, et une zone entourant cette âme sur la pointe de la léchette 20, formée du cavalier 30 réalisé dans un matériau différent.

On comprend que de façon générale, au moins la couche extérieure des parties en saillies est réalisée à partir d'une pièce séparée, à savoir le cavalier 30, reliée à la léchette 20.

A titre indicatif, on peut envisager de mettre en oeuvre l'invention pour des pièces thermomécaniques, en particulier des rotors, réalisées en acier ou en superalliage à base de nickel qui sont destinés à venir se positionner face à une couronne abradable en un matériau métallique déposé par projection plasma (par exemple un dépôt de nickel/graphite ou encore de nickel-chrome-aluminium/bentonite), ou bien un abradable en nid d'abeille en alliage nickel molybdène chrome (de type hastelloy X - marque déposée) .

Dans ce cas, les cavaliers 30 sont de préférence réalisés dans un matériau abrasif autobrasable pouvant être réalisé par RBD (rechargement brasage diffusion), ou bien en céramique de coupe en réalisant le brasage avec un métal d'apport brasé par exemple par laser.

De plus, chaque partie en saillie (cavalier 30) présente une hauteur maximale dépassant de la hauteur minimale de la léchette (20) d'environ 0,2 mm.

Dans ce qui précède on a décrit des léchettes 20 avec trois parties saillantes (cavaliers 30), mais un nombre différent peut être prévu à partir de deux et plus de trois, en respectant de référence une répartition angulaire régulière. De préférence, la léchette 20 comporte au moins trois parties en saillie (30) régulièrement réparties angulairement.

En outre sur les dessins, on a représenté une léchette annulaire qui est dirigée radialement vers l'extérieur, mais on peut prévoir d'appliquer la présente invention également pour une léchette annulaire qui est dirigée radialement vers l'intérieur.

On peut concevoir (cas de figure non représenté) que les dents présentent une autre forme par le fait que chaque partie en saillie présente une hauteur augmentant progressivement depuis un intervalle jusqu'à une pointe et diminuant progressivement depuis ladite pointe jusqu'à l'intervalle suivant, par le fait que le cavalier est d'épaisseur variable.

## Revendications

1. Pièce thermomécanique de turbomachine de révolution autour d'un axe longitudinal (X-X'), comprenant au moins une léchette annulaire (10 ; 20) destinée à un labyrinthe d'étanchéité,
la léchette (20) présentant en direction radiale une hauteur variable le long de sa circonférence en formant plusieurs parties en saillie (30), **caractérisée en ce que** les parties en saillie sont formées par un cavalier en forme de U fixé par chevauchement dans une empreinte en creux réalisée dans la léchette, ledit cavalier ayant un profil complémentaire de cette léchette.

2. Pièce thermomécanique selon la revendication précédente, **caractérisée en ce que** la léchette (20) forme un anneau de forme discontinue en section présentant le long de sa circonférence plusieurs parties en saillie (30) entre lesquelles subsiste un intervalle ou une rupture dans la hauteur.

3. Pièce thermomécanique selon la revendication 2, **caractérisée en ce que** chaque partie en saillie présente une hauteur augmentant progressivement depuis un intervalle jusqu'à une pointe et diminuant progressivement depuis ladite pointe jusqu'à l'intervalle suivant.

4. Pièce thermomécanique selon la revendication 1 ou 2, **caractérisée en ce que** la léchette (20) présente une hauteur différente selon les secteurs angulaires.

5. Pièce thermomécanique selon la revendication 4, **caractérisée en ce qu'**à l'exception des parties en saillie (30), la léchette (20) présente une hauteur sensiblement constante.

6. Pièce thermomécanique selon la revendication 4 ou 5, **caractérisée en ce qu'**au moins la couche extérieure des parties en saillies (30) est réalisée en un matériau différent du reste de la léchette (20).

7. Pièce thermomécanique selon la revendication 6, **caractérisée en ce qu'**au moins la couche extérieure des parties en saillies (30) est réalisée à partir d'une pièce séparée reliée à la léchette (20).

8. Pièce thermomécanique selon l'une quelconque des revendications précédentes, **caractérisée en ce que** chaque partie en saillie (30) présente une hauteur maximale dépassant de la hauteur minimale de la léchette (20) d'environ 0,2 mm.

9. Pièce thermomécanique selon l'une quelconque des revendications précédentes, **caractérisée en ce que** la léchette (20) comporte au moins trois parties en saillie (30) régulièrement réparties angulairement.

10. Pièce thermomécanique selon l'une quelconque des revendications précédentes, **caractérisée en ce qu'**elle forme un rotor de turbomachine.

11. Pièce thermomécanique selon l'une quelconque des revendications précédentes, **caractérisée en ce que** la léchette annulaire (20) est dirigée radialement vers l'extérieur.

12. Turbomachine, **caractérisée en ce qu'**elle comporte une pièce thermomécanique selon l'une quelconque des revendications précédentes.

13. Procédé de fabrication d'une léchette annulaire (20) destinée à un labyrinthe d'étanchéité, sur une pièce thermomécanique de turbomachine de révolution autour d'un axe longitudinal (X-X'), **caractérisé en ce qu'**il comporte les étapes suivantes :
a) on fournit une pièce thermomécanique de turbomachine de révolution autour d'un axe longitudinal présentant une léchette annulaire (20) de hauteur en direction radiale sensiblement constante tout le long de la circonférence,
b) on fournit une machine d'usinage ainsi qu'un outil d'usinage (22) ayant un profil en creux qui est contenu dans le profil radial de la léchette annulaire (20),
c) on réalise l'usinage d'au moins une empreinte (24) ayant le profil complémentaire au profil en creux de l'outil d'usinage (22) à la surface de la léchette en plongeant l'outil d'usinage en direction radiale ; et
d) on fournit un cavalier (30) en forme de U réalisé dans un matériau plus dur que la pièce et ayant un profil en creux complémentaire de ladite empreinte (24) ;
e) on dispose ledit cavalier (30) sur ladite empreinte (24) par chevauchement, ce qui engendre une surépaisseur locale au moins en direction radiale ; et
f) on relie le cavalier (30) à ladite léchette (20).

14. Procédé selon la revendication précédente, **caractérisé en ce que** le cavalier (30) est réalisé par moulage ou compactage de métal, de céramiques et/ou de carbures, par la métallurgie des poudres (MDP), ou par le procédé de moulage par injection de métal (MIM).

15. Procédé selon la revendication 13 ou 14, **caractérisé en ce qu'**au cours de l'étape f) on relie le cavalier (30) à ladite léchette (20) par brasure.

16. Procédé l'une quelconque des revendications 13 à 15, **caractérisé en ce que** le cavalier (30) est réalisé en acier ou en superalliage ou en céramique.

17. Procédé selon l'une des revendications 13 à 16, **caractérisé en ce que** la machine d'usinage est une machine à électro-érosion ou machine d'usinage par procédé électrolytique et **en ce que** ledit outil d'usinage est une électrode.

18. Procédé selon l'une des revendications 13 à 17, **caractérisé en ce que** la pièce est en acier, en superalliage, en particulier en superalliage à base de nickel, ou en alliage de titane.

## Claims

1. A thermomechanical turbomachine part that is circularly symmetrical about a longitudinal axis (X-X'), the part comprising at least one annular wiper (10 ; 20) for a sealing labyrinth,
the wiper (20) presenting a varying height in a radial direction along its circumference, forming a plurality of projecting portions (30), **characterized** on that the projecting portions are formed by a U-shaped staple secured astride the wiper in a hollow recess formed in the wiper, said staple having a profile that is complementary of the wiper.

2. A thermomechanical part according to the previous claim, **characterized in that** the wiper (20) forms a ring of discontinuous section, presenting along its circumference a plurality of projecting portions (30) between which there exists a gap or a break in height.

3. A thermomechanical part according to claim 2, **characterized in that** each projecting portion presents a height that increases progressively from a gap to a tip and decreases progressively from said tip to the following gap.

4. A thermomechanical part according to claim 1 or 2, **characterized in that** the wiper (20) presents different heights in different angular sectors.

5. A thermomechanical part according to claim 4, **characterized in that** the wiper (20) presents a height that is substantially constant, with the exception of the projecting portions (30).

6. A thermomechanical part according to claim 4 or 5, **characterized in that** at least the outer layer of the projecting portions (30) is made of a material that is different from the material of the remainder of the wiper (20).

7. A thermomechanical part according to claim 6, **characterized in that** at least the outer layer of the projecting portions (30) is made using a separate part connected to the wiper (20).

8. A thermomechanical part according to any one of the previous claims, **characterized in that** each projecting part (30) presents a maximum height projecting proud above the minimum height of the wiper (20) of about 0.2 mm.

9. A thermomechanical part according to any one of the previous claims, **characterized in that** the wiper (20) has at least three projecting portions (30) that are regularly distributed angularly.

10. A thermomechanical part according to any one of the previous claims, **characterized in that** it forms a turbomachine rotor.

11. A thermomechanical part according to any one of the previous claims, **characterized in that** the annular wiper (20) is directed radially outwards.

12. A turbomachine, **characterized in that** it comprises a thermomechanical part according to any one of the previous claims.

13. A method of fabricating an annular wiper (20) for a sealing labyrinth on a thermomechanical turbomachine part that is circularly symmetrical about a longitudinal axis (X-X'), **characterized in that** the method comprises the following steps:
a) providing a thermomechanical turbomachine part that is circularly symmetrical about a longitudinal axis, the part presenting an annular wiper (20) of height in the radial direction that is substantially constant all around its circumference ;
b) providing a machine tool and a machining tool (22) having a hollow profile that is contained in the radial profile of the annular wiper (20),
c) machining at least one recess (24) having a profile that is complementary to the hollow profile of the machining tool (22) to the surface of the wiper by plunging the machining tool in the radial direction ; and
d) providing a U-shaped staple (30) made of a material that is harder than the material of the part and having a hollow profile complementary to said recess (24) ;
e) placing said staple (30) astride said recess (24), thereby providing local extra thickness at least in the radial direction ; and
f) securing the staple (30) to said wiper (20).

14. A method according to the previous claim, **characterized in that** the staple (30) is made by molding or compacting metal, ceramics and/or carbides, by powder metallurgy (MDP) or by the metal injection molding method (MIM).

15. A method according to claim 13 or 14, **characterized in that** during step f), the staple (30) is connected to said wiper (20) by brazing.

16. A method according to any one of the claims 13 to 15, **characterized in that** the staple (30) is made of steel or of superalloy or of ceramics.

17. A method according to any one of the claims 13 to 16, **characterized in that** the machine tool is an electro-erosion machine or a machine for machining by an electrolytic method, and **in that** said machining tool is an electrode.

18. A method according to any one of the claims 13 to 17, **characterized in that** the part is made of steel, superalloy, in particular a nickel-based superalloy, or titanium alloy.

## Patentansprüche

1. Um eine Längsachse (X-X') umlaufendes thermomechanisches Teil einer Turbomaschine, das wenigstens eine für eine Labyrinthdichtung bestimmte ringförmige Dichtungszunge (10; 20) aufweist, wobei die Dichtungszunge (20) in radialer Richtung entlang ihres Umfangs eine variable Höhe durch Bildung mehrerer vorspringender Teile (30) aufweist, **dadurch gekennzeichnet, daß** die vorspringenden Teile von einer U-förmigen Klammer gebildet sind, die durch Übergreifen in einer in der Dichtungszunge ausgebildeten Vertiefung befestigt ist, wobei die Klammer ein diese Dichtungszunge ergänzendes Profil aufweist.

2. Thermomechanisches Teil nach dem vorhergehenden Anspruch, **dadurch gekennzeichnet, daß** die Dichtungszunge (20) einen Ring mit im Querschnitt unterbrochener Form bildet, der entlang seines Umfangs mehrere vorspringende Teile (30) aufweist, zwischen denen ein Zwischenraum oder eine Unterbrechung in der Höhe bestehen bleibt.

3. Thermomechanisches Teil nach Anspruch 2, **dadurch gekennzeichnet, daß** jedes vorspringende Teil eine Höhe aufweist, die von einem Zwischenraum bis zu einer Spitze schrittweise zunimmt und von der Spitze bis zum nächsten Zwischenraum schrittweise abnimmt.

4. Thermomechanisches Teil nach Anspruch 1 oder 2, **dadurch gekennzeichnet, daß** die Dichtungszunge (20) eine entsprechend den Winkelsektoren unterschiedliche Höhe aufweist.

5. Thermomechanisches Teil nach Anspruch 4, **dadurch gekennzeichnet, daß** die Dichtungszunge (20) mit Ausnahme der vorspringenden Teile (30) eine im wesentlichen konstante Höhe aufweist.

6. Thermomechanisches Teil nach Anspruch 4 oder 5, **dadurch gekennzeichnet, daß** wenigstens die äußere Schicht der vorspringenden Teile (30) aus einem anderen Material als der Rest der Dichtungszunge (20) besteht.

7. Thermomechanisches Teil nach Anspruch 6, **dadurch gekennzeichnet, daß** wenigstens die äußere Schicht der vorspringenden Teile (30) aus einem separaten, mit der Dichtungszunge (20) verbundenen Teil besteht.

8. Thermomechanisches Teil nach einem der vorhergehenden Ansprüche, **dadurch gekennzeichnet, daß** jedes vorspringende Teil (30) eine maximale Höhe aufweist, welche die Mindesthöhe der Dichtungszunge (20) um etwa 0,2 mm überragt.

9. Thermomechanisches Teil nach einem der vorhergehenden Ansprüche, **dadurch gekennzeichnet, daß** die Dichtungszunge (20) wenigstens drei winkelmäßig gleichmäßig verteilte vorspringende Teile (30) aufweist.

10. Thermomechanisches Teil nach einem der vorhergehenden Ansprüche, **dadurch gekennzeichnet, daß** es einen Rotor einer Turbomaschine bildet.

11. Thermomechanisches Teil nach einem der vorhergehenden Ansprüche, **dadurch gekennzeichnet, daß** die ringförmige Dichtungszunge (20) radial nach außen gerichtet ist.

12. Turbomaschine **dadurch gekennzeichnet, daß** sie ein thermomechanisches Teil nach einem der vorhergehenden Ansprüche aufweist.

13. Verfahren zur Herstellung einer für eine Labyrinthdichtung bestimmten ringförmigen Dichtungszunge (20), an einem um eine Längsachse (X-X') umlaufenden thermomechanischen Teil einer Turbomaschine, **dadurch gekennzeichnet, daß** es die folgenden Schritte umfaßt:
a) Bereitstellen eines um eine Längsachse umlaufenden thermomechanischen Teils einer Turbomaschine, das eine ringförmige Dichtungszunge (20) mit in radialer Richtung im wesentlichen konstanter Höhe entlang des gesamten Umfangs aufweist,
b) Bereitstellen einer Bearbeitungsmaschine sowie eines Bearbeitungswerkzeugs (22) mit einem Hohlprofil, das in dem radialen Profil der ringförmigen Dichtungszunge (20) enthalten ist,
c) Durchführen der Bearbeitung wenigstens einer Vertiefung (24) an der Oberfläche der Dichtungszunge durch Eintauchen das Bearbeitungswerkzeugs in radialer Richtung, wobei die Vertiefung (24) das ergänzende Profil zu dem Hohlprofil des Bearbeitungswerkzeugs (22) aufweist, und
d) Bereistellen einer U-förmigen Klammer (30), die aus einem härteren Material als das Teil gefertigt ist und die ein die Vertiefung (24) ergänzendes Hohlprofil aufweist,
e) Anordnen der Klammer (30) auf der Vertiefung (24) durch Übergreifen, wodurch eine lokale Überdicke wenigstens in radialer Richtung erzeugt wird, und
f) Verbinden der Klammer (30) mit der Dichtungszunge (20).

14. Verfahren nach dem vorhergehenden Anspruch, **dadurch gekennzeichnet, daß** die Klammer (30) durch Formen oder Verdichten von Metall, Keramik und/oder Karbiden, mittels Pulvermetallurgie (PM) oder mittels des Metallspritzgußverfahrens (MIM) gefertigt wird.

15. Verfahren nach Anspruch 13 oder 14, **dadurch gekennzeichnet, daß** im Laufe des Schrittes f) die Klammer (30) mit der Dichtungszunge (20) durch Löten verbunden wird.

16. Verfahren nach einem der Ansprüche 13 bis 15, **dadurch gekennzeichnet, daß** die Klammer (30) aus Stahl oder aus Superlegierung oder aus Keramik besteht.

17. Verfahren nach einem der Ansprüche 13 bis 16, **dadurch gekennzeichnet, daß** die Bearbeitungsmaschine eine Elektroerosionsmaschine oder eine Maschine zur Bearbeitung mittels elektrolytischem Verfahren ist, und daß das Bearbeitungswerkzeug eine Elektrode ist.

18. Verfahren nach einem der Ansprüche 13 bis 17, **dadurch gekennzeichnet, daß** das Teil aus Stahl, aus einer Superlegierung, insbesondere einer Superlegierung auf Nickelbasis, oder aus einer Titanlegierung besteht.
